Europäisches Patentamt

European Patent Office

Office européen des brevets

(19)

(11) Publication number: **0 136 154**
A2

# (12) EUROPEAN PATENT APPLICATION

(21) Application number: **84306396.7**

(22) Date of filing: **19.09.84**

(51) Int. Cl.⁴: **H 02 G 15/188**, H 02 G 15/068

(30) Priority: **20.09.83 US 534219**

(43) Date of publication of application: **03.04.85**
**Bulletin 85/14**

(84) Designated Contracting States: **AT BE CH DE FR IT LI NL SE**

(71) Applicant: **RAYCHEM CORPORATION, 300 Constitution Drive, Menlo Park California 94025 (US)**

(72) Inventor: **Hajek, Charles Vincent, 8136 Idlewild Court, Newark California 94560 (US)**
Inventor: **Schumer, Steven Edward, 360 Auburn Way No. 24, San Jose California 95129 (US)**

(74) Representative: **Jones, David Colin et al, Raychem Limited Intellectual Property Law Department Swan House 37-39 High Holborn, London WC1 (GB)**

(54) **Cable joints and terminations.**

(57) Bifurcated and trifurcated joints (Y-joints and H-joints) between shielded, medium voltage electrical cables comprising a main cable and one or two branch cables can be formed by connecting the conductors of the cables, positioning one of the main cable and one of the branch cables in relatively close parallel relationship, applying stress control material over the semiconductive shield of the cables to encompass the cut-back edge of the semiconductive shield and the adjacent insulation layer of each of the cables and between the shields of the parallel cables, enclosing the joint in a protective sleeve comprising an inner insulating layer and an outer conductive layer, and electrically connecting the outer conductive layer to each of the shields of the cables. An outer protective jacket enclosing the entire joint can be applied. Terminations of adjacent parallel electrical cables can be similarly formed.

## CABLE JOINTS AND TERMINATIONS

Description

This invention relates to a method of forming a branch-off joint between a shielded, medium voltage, main electric cable and at least one other shielded electric cable. It also relates to a method of terminating two or more adjacent, shielded, medium voltage electric cables. By "medium voltage" is meant voltages in the range of about 1 kV to about 36 kV.

It is often necessary to form a branch-off in which at least a main electric cable is connected to at least one other cable. Typically this is to provide a subsidiary power circuit from a main power distribution circuit, for example, for supplying electricity to a subdivision or industrial complex. When such a joint involves a main cable which has been severed in order to make the branch-off and one branch cable, the joint is frequently referred to as a "Y" joint or a bifurcated joint and when the joint involves two branch cables it is referred to as an "H" joint or a trifurcated joint. For convenience the terms "Y" and "H" are used herein in describing such joints. (In some cases, the main cable need not be severed and a wraparound connector and other wraparound components can be used.)

At times it is desirable to terminate two or more adjacent, shielded, medium voltage cables. This invention provides a method for forming such "Y" and "H" joints and terminations.

Shielded, medium voltage, electric cables typically comprise at least one conductor, an electrically conductive conductor shield surrounding the conductor, a dielectric layer surrounding the conductor shield, an electrically conductive shield around the dielectric layer, an electrically conductive metallic shield and, optionally, an outer protective jacket. When a shielded medium voltage electric cable is terminated or is jointed to another such electric cable, the dielectric layer is removed or "cut back" to expose a length of the conductor and the shield is removed to expose a length of dielectric layer. The conductor is then connected to the conductor of the other cable or to a terminating lug. The connection can be made by a convenient technique, such as crimping or soldering. Typically, the connection is made by means of a deformable crimp. After the conductors are connected, it is necessary to provide the connecting region with appropriate insulation and shielding. One method of enclosing and shielding cable joints and terminations is described in U.S. Patent No. 4,353,131, the disclosure of which is incorporated herein by reference.

In forming "Y" or "H" joints or terminations involving adjacent cables, it is customary to insulate and shield each of the cables individually. Thus, in a "Y" joint, insulation and shielding is provided for three separate cables and for an "H" joint, for four separate cables. The individual insulation and shielding is bulky and requires considerable space around the resulting assembly. Further, some techniques, for example, wrapped insulating tape, require considerable skill on the part of the installer. Installation of the enclosure can be difficult where space is limited, for example, in underground conduits.

In accordance with one aspect of the present invention, there is provided a method of forming a branch-off joint between a shielded, medium voltage electric cable and at least two other shielded, medium voltage electric cables, each of said cables having at least one conductor surrounded by a dielectric layer which in turn is surrounded by an electrically conductive shield, said joint being formed by removing a portion of the dielectric layer to expose a length of the conductor and a portion of the shield to expose a length of the dielectric layer, wherein the method comprises: connecting the conductors of the cables; positioning two of the cables in relatively close substantially parallel relationship to each other; applying between and surrounding the parallel conductors stress control material having an impedance of between about $5 \times 10^7$ and $8 \times 10^9$ ohm. cm.; applying insulating material over the joint so as to extend across the joint and overlap a portion of the shield of each of the cables; applying a semi-conductive shielding layer over the insulating material; and electrically connecting said shielding layer to the shield of each of the cables.

Another aspect of this invention comprises a branch-off joint between at least three shielded, medium voltage electric cables, each of said cables comprising at least one conductor surrounded by a dielectric layer a section of which has been removed to expose a length of the conductor and an outer electrically conductive shield, a section of which has been removed to expose a length of the dielectric layer, wherein the conductors of the cables are jointed together with two of said cables being positioned in relatively close substantially parallel relationship with each other, wherein stress control material is positioned between said cables and surrounding the edge of each of the conductive shields of said cables and extending along a length of the exposed dielectric layer, wherein insulating material extends across the joint so as to overlap a portion of the shield of each of the cables, and wherein a semi-conductive shielding layer is positioned over the insulating material and is electrically connected to each of the cable shields.

Yet another aspect of this invention comprises a method of enclosing terminations of adjacent shielded, medium voltage electric cables, each of said cables having at least one conductor surrounded by a dielectric layer which in turn is surrounded by an electrically conductive shield, each termination being formed by removing a portion of the dielectric layer to expose a length of the conductor and a portion of the shield to expose a length of the dielectric layer and securing each conductor to a terminating lug, wherein the method comprises: positioning the cables in relatively close substantially parallel relationship to each other; applying between and surrounding the parallel conductors a stress control material having an impedance of between about $5 \times 10^7$ and $8 \times 10^9$ ohm. cm.; applying insulating material over the termination such that it overlaps a portion of the shield of each of the cables; applying a semi-conductive shielding layer over the insulating material; and electrically connecting said shielding layer to the shield of each of the cables.

It has thus been discovered that high electrical stress areas of the adjacent cables of such a joint or termination need not be insulated and shielded individually, but quite unexpectedly, may be enclosed in a common shield. In essence, the two cables are converted into the equivalent of a single cable thus permitting the joint to be formed in a manner similar to that of an in-line joint between two main cables as described in the above-mentioned U.S. Patent No. 4,353,131.

This invention thus provides a method of forming and enclosing a "Y" or "H" joint or termination of adjacent cables which results in a compact configuration. Further, the method of this invention is easily accomplished under limited space environments encountered in the field.

Preferably, the impedance of the stess control. material is between about $3 \times 10^{8}$ and $5 \times 10^{9}$ ohm. cm.

The shielded medium voltage cables to be jointed or spliced are prepared in the conventional manner. That is, the outer jacket, if present, is cut back to expose a length of the underlying shield. The shield, which is electrically conductive, typically comprises an outer metallic layer and a semiconductive layer immediately adjacent the dielectric. The metallic layer can comprise a lead sheath, spirally wrapped metallic tape, shield wires or the like. The semiconductive layer generally comprises a layer of polymeric material having dispersed therein conductive particles such as carbon black to provide a smooth grounded envelope over the cable insulation. In preparing the cable for jointing the metallic layer of the shield is generally cut back or removed to expose a length of the semiconductive layer. The semiconductive layer is removed to expose the dielectric layer surrounding the conductor and the dielectric layer is removed to expose a length of the conductor. The exact configuration of a particular cable may vary somewhat from the above generalised description. Variations depend on the rated generalised description. Variations depend on the rated operating voltage, the material used as the cable rated insulation, the construction of the metallic and semiconductive shield, and the like. For example, paper insulated lead cable (PILC) typically has no semiconductive layer over the oil empregnated paper insulation, only a metallic shield with lead jacket. This type of cable is treated the same as the polymeric cables after installation of protective tubings to transform the paper insulation into a polymeric one.

The conductors maybe connected using any appropriate connector for forming a Y-splice or H-splice. Such connectors typically comprise a metal ferrule which is deformed by crimping with an externally applied compressive force, forcing it into intimate contact with the conductors of the cables. Other means for joining the conductors of the cables, for example soldering or welding, can be used, if desired.

As referred to above, two of the cables of the joint, e.g. the main cable and the branch cable, are placed in relatively close parallel relationship. When an H-splice is formed preferably each of the branch cables are placed parallel to the main cable. By close parallel relationship is meant that the cables are placed alongside each other with the space between them being from about 0.1 to about 1.5 cm.

A stress control material is then applied to the parallel cables such that the stress control material overlaps the edges of the semiconductive layer where it has been removed and extends over a portion of the adjacent insulation layer. The stress control material applied and the form in which it is provided depends to a certain extent on the voltage of the electrical system.  Generally the stress control material used will be a polymeric material containing appropriate fillers. The stress control material should have an impedence in the range of about $5 \times 10^7$ ohm-cm to about $8 \times 10^9$ ohm-cm, measured at 40-80 Hertz.

If the joint is in an electrical system below about 10kV, e.g. of 5 or 8 kV, the stress control material can be applied as a mastic.  The mastic can take the form of a maleable filling compound, tape, sheet or the like.  A typical stress control material that can be used in this manner is an epihalohydrin based composition such as those disclosed in U.S. Patent No. 4,378,463.  Such materials have an impedance in the range of about $1 \times 10^9$ ohm-cm to about $5 \times 10^9$ ohm-cm, measured at 40-80 Hertz.

Another form in which the stress control material can be applied is as a tubular article.  The tubular article can be applied as a dimensionally recoverable article, such as a heat shrinkable tube.  This form is preferred in systems above 10 kV, for example 15 kV systems.  Stress control materials and dimensionally recoverable articles prepared therefrom are described in U.K. Patents Nos. 1,470,501, 1,470,502, 1,470,503, 1,470,504, and U.S. Patent No. 4,363,842, the disclosures of which are incorporated herein by reference. Such materials generally comprise a polymeric material such as polyethylene in which carbon black is dispersed to give the material the desired impedance.  Stress control tubular articles used in accordance with this invention should be formed of a material having an impedance in the range of $5 \times 10^7$ to $5 \times 10^9$ ohm-cm preferably $3 \times 10^8$ to $1 \times 10^9$ ohm-cm, measured at 40-80 Hertz.

Yet another form in which the stress control material can be applied as a multi-hole formed profile. The multi-hole profile may contain two holes extending therethrough to accomodate the parallel cables. The length of the profile should be sufficient to ensure overlap of the semiconductive layers of the cable shields and extend over a portion of the adjacent insulation layers. The profile can be dimensionally recoverable, preferably heat shrinkable. The holes of the profile are thus larger to provide for ease of installation. After being placed in position the profile is recovered causing the profile to shrink into intimate contact with both parallel cables.

The entire area between the parallel cables should be void free. This area may be entirely filled with the stress control material. In embodiments where the stress control material does not completely fill the space between the parallel cables a void filling material may be used to fill the remaining space. The void filling material should be an insulating material having a dielectric constant of about 2 to about 6 preferably about 2.5 to about 3.2. The void filling material can be applied in any convenient form. It can be applied in the form of a maleable filling material, or as an extruded thermoplastic material in the form of a tape, sheet or the like. In preferred embodiments of the invention, the void filling insulating material may be in the form of an extruded profile of thermoplastic material. This form is particularly preferred where the insulating and/or conductive layers extending across the joint are applied as heat shrinkable sleeves. Heat applied to cause the layers to shrink also causes the void filling profile to flow thus effectively filling all voids. To ensure filling the voids, the filling material preferably has a viscosity of about $10^4$ poise.

After the Y- or H-joint has been treated as indicated above, it must be insulated and shielded and the shield of the joint connected to the shields of the cables to provide continuous shielding. One method of enclosing the joint is that disclosed in above mentioned U.S. Patent No. 4,383,135, the disclosure of which is incorporated by reference. In accordance with this method the Y-splice or H-splice is enclosed in a protective sleeve comprising an inner insulating layer and an outer conductive layer. The insulating layer overlaps the semiconductive layer of the conductive cable shield. The sleeve is preferably installed in the form of dimensionally-recoverable, in particular heat shrinkable, polymeric tubular articles. The insulating and conductive layers may be applied as separate articles or as a composite article such as that described in U.S. Patent No. 4,390,745, the disclosure of which is incorporated herein by reference. An additional stress control layer spanning the joint can be employed, if desirable to reduce electrical stress.

The conductive outer layer is electrically connected to the semiconductive layer of the cable shield. The metallic layer of the cable shields are then connected by a metallic member, such as a metallic braid or the like which spans the joint, making contact with the metallic shield of each of the cables.

An outer protective jacket enclosing the entire joint can be applied. Preferably the protective jacket is a polymeric tubular article. The tubular article also is preferably installed as a dimensionally recoverable, preferably heat recoverable, tubular article or wraparound sleeve. To provide an environmental seal at the end of the protective jacket encompassing the parallel cables a conventional molded break out can be used. Such break outs are generally molded articles having a single opening at one end and two (or more for some applications) at the other end. Other methods of protecting a branch-off such as that disclosed in U.S. Patent No. 4,298,415 in which a clip is used to bring and maintain the edges of a heat recoverable sleeve in sealing engagement during recovery of the sleeve. A heat recoverable two-hole tubing of an insulating material can be used to seal the parallel cables.

A recoverable article is an article the dimensional configuration of which may be made substantially to change when subjected to some treatment. Heat-recoverable articles, which recover when heated, are particularly preferred since they are simple to produce and the means for causing recovery is widely available. Usually these articles recover, towards an original shape from which they have previously been deformed but the term "recoverable", as used herein, also includes an article which adopts a new configuration, even if it has not been previously deformed.

In their most common form, such articles comprise a heat-shrinkable sleeve made from a polymeric material exhibiting the property of elastic or plastic memory as described, for example, in U.S. Patents 2,027,962, 3,086,242 and 3,597,372. As is made clear in, for example, U.S. Patent 2,027,962, the original dimensionally heat-stable form may be a transient form in a continuous process in which, for example, an extruded tube is expanded, whilst hot, to a dimensionally heat-unstable form but, in other applications, a preformed dimensionally heat-stable article is deformed to a dimensionally heat-unstable form in a separate stage.

In the production of heat recoverable articles, the polymeric material may be cross-linked at any stage in the production of the article that will enhance the desired dimensional recoverability. One manner of producing a heat-recoverable article comprises shaping the polymeric material into the desired heat-stable form, subsequently cross-linking the polymeric material, heating the article to a temperature above the crystalline melting point or, for amorphous materials the softening point, as the case may be, of the polymer, deforming the article and cooling the article whilst in the deformed state so that the deformed state of the article is retained. In use, since the deformed state of the article is heat-unstable, application of heat will cause the article to assume its original heat-stable shape.

In other articles, as described, for example, in British Patent 1,440,524, an elastomeric member such as an outer tubular member is held in a stretched state by a second member, such as an inner tubular member, which, upon heating weakens and thus allows the elastomeric member to recover.

Articles which are dimensionally recoverable without the application of heat are described in U.S. Patents Nos. 4,070,746, 4,179,320 and 4,338,970. Such articles comprise an elastomeric member held in a stretched state by a retaining member. The elastomeric member is retained in the stretched state until released from the retaining member by application of solvent or by mechanically breaking or removing the retaining member. Typically, such articles comprise an elastomeric tube held in a stretched state by an outer tubular member to which it is adhered.

It will be understood that the present invention also provides a joint and termination produced in accordance with the respective methods of the invention.

Cable jointing and terminating methods, and joints and terminations formed thereby, each in accordance with the present invention, will now be described, by way of example, with reference to the accompanying drawings, in which:

Figure 1 is a longitudinal section through a trifurcated joint (H-splice);

Figure 2 is a longitudinal section through a bifurcated cable joint (Y-splice);

Figure 3 is a longtitudinal section through another embodiment of a trifurcated joint (H-splice);

Figure 4 is a cross section of a multi-hole formed profile of stress control material employed in the embodiment of Figure 3; and

Figure 5 is a cross section of a formed profile of insulating material which can be positioned between the parallel cables to fill the gap between the cables.

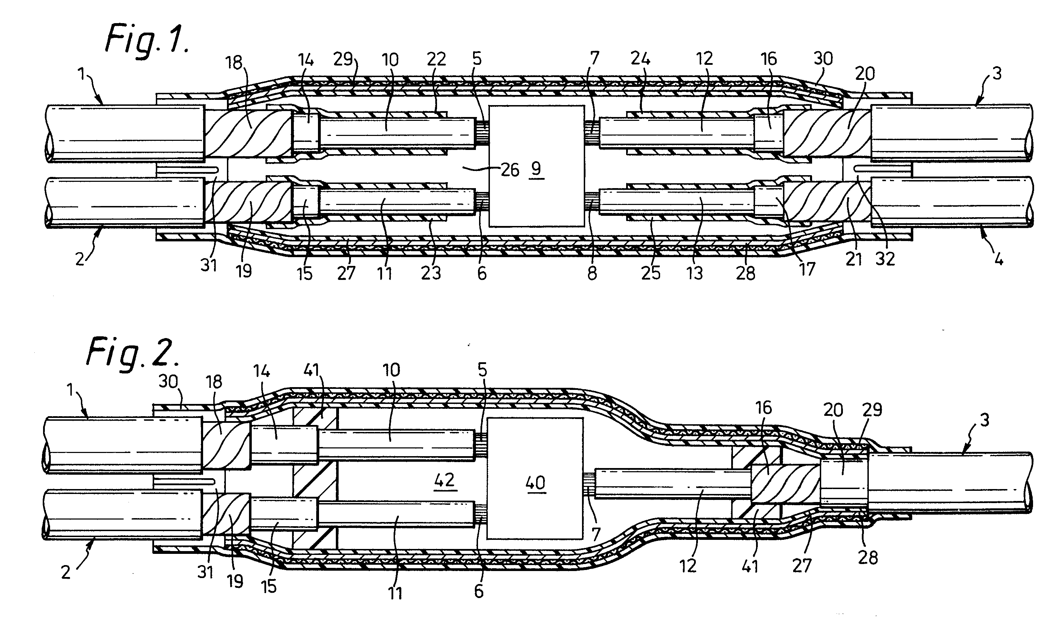

Referring to the drawings, in which corresponding parts are referenced by the same number in the various figures, in Figure 1, cables 1, 2, 3 and 4 are spliced together. Cables 1 and 3 form the main power circuit and cables 2 and 4 are branch cables conducting electrical power from the main circuit to subsidiary circuits. The conductors 5, 6, 7 and 8 of cables 1, 2, 3 and 4, respectively, are connected together by connector 9. Prior to the conductors being connected the cables were prepared by removing the cable dielectric layers 10, 11, 12 and 13 to expose the conductors, similarly removing the semiconductive layers 14, 15, 16 and 17 of the cable shield to expose a length of the dielectric layers and removing the metallic shields 18, 19, 20 and 21 to expose a length of the semiconductive layer of the shield. The length that each layer is cut back is determined to a certain extent by the actual operating voltage of the system and the type of cable used. In Figure 1, the cables being joined comprise 15 kV, plastic insulated cables.

It is to be noted that cables 1 and 2 and 3 and 4 are in parallel relationship by virture of the particular connector used to connect cables 1, 2, 3 and 4. Had the step of connecting the cables not resulted in the cables being in parallel relationship, it is necessary to arrange cables in this manner to take advantage of the compact assembly resulting from employing the invention.

In the trifurcated joint (H-splice) of Figure 1 the electrical field is controlled by installing stress control tubes 22, 23, 24 and 25 around and overlaping the edge of the cutback of semiconductive layers 14, 15, 16 and 17. The stress control tubular articles comprise a conductive polymer composition comprising a polymeric matrix containing dispersed therein conductive particles such as carbon black and/or silicon carbide. The tubular articles 14, 15, 16 and 17 in this embodiment are installed as heat shrinkable tubular articles. Such articles are commercially available under the trademark SCTM from Raychem Corporation, Menlo Park, California.

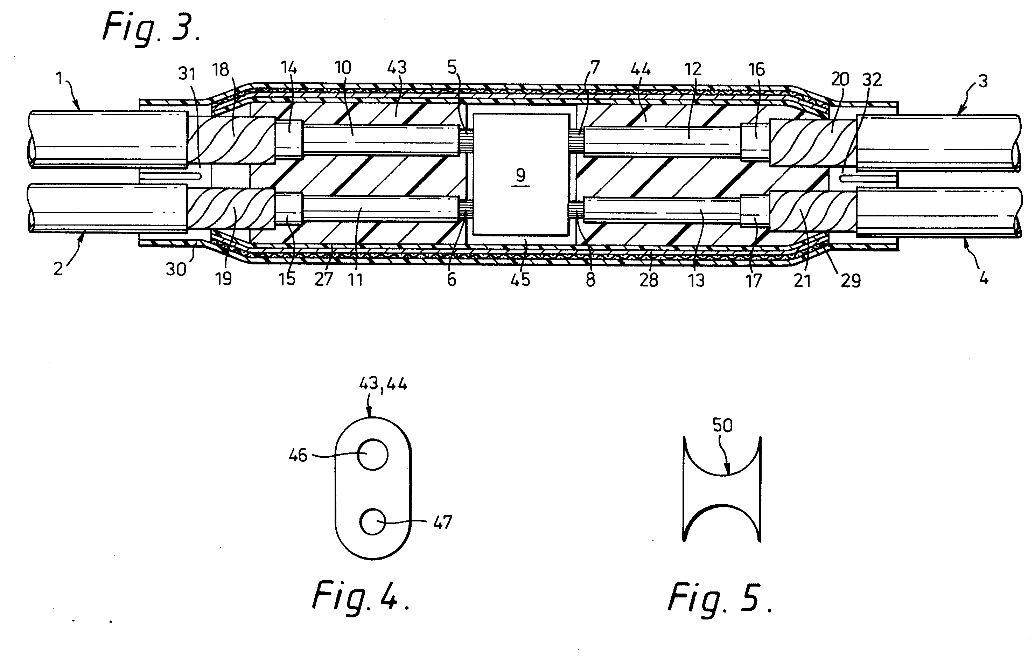

The space between and around the cables is filled with a void filling insulation composition 26. As discussed above, the filling material can be applied in any appropriate form. In a preferred embodiment the filling material is applied as an extruded profile contoured to fit between the parallel cables. This is illustrated in Figure 5. In Figure 5, an extruded profile 50 of filling material has a cross-sectional configuration which permits the void filling insulating material to be readily applied between the parallel cables.

The joint is further protected by an insulating layer, 27 and an outer conductive layer 28 which have been installed as a composite heat shrinkable tubular article. The conductive layer 28 is connected to the metallic layers 18 and 19 of cables 1 and 2 by a metallic braid, 29, which is spirally wrapped over the layer 28 spanning the joint and connected to metallic layers 20 and 21 of cables 3 and 4. A protective outer jacket 30 is then installed over the entire joint and contacting the outer protective jackets of each of cables 1, 2, 3 and 4. Prior to installing the protective outer jacket, the parallel cables are provided with two-hole tubes or break-outs 31 and 32. The outer jacket, 30 and the break-outs 31 and 32 are each applied as heat shrinkable articles.

Figure 2 is a longitudinal section of a bifurcated joint (Y-splice) protected by a second embodiment of the invention. In Figure 2 cables 1, 2 and 3 are spliced together. Each of the cables is a 5 kV cable having an extruded dielectric. Cables 1 and 3 form the main electrical circuit with branch cable 2 providing a subsidiary circuit. The cables are prepared as described above. The conductors, dielectric, semiconductive shield and metallic shields of cables 1, 2 and 3 are numbered as in Figure 1. Cables 1, 2 and 3 are connected by connector 40. Cables 1 and 2 are in close parallel configuration. Stress control material 41 is applied around and between the cutback or edge of the semiconductive shields 14, 15 and 16, and around connector, 40. It is to be noted that stress control material 41 surrounds the edges of the semiconductive layers 14 and 15 of the parallel cables and fills the space between them. The stress control material used is an epihalohydrin based composition containing trihydrate as a filler. The composition has an impedence of $3 \times 10^9$ ohm. cm., is a maleable solid at room temperature and has a viscosity at 70°C of about $10^5$ poise. The remaining space around the splice, including the space between cables 1 and 2 is filled with a void filling insulating material 42. Insulating and conductive layers, 27 and 28 respectively, are then installed spanning the joint and contacting the metal shields of each of the cables as in Figure 1.

Metallic braid 25 is spirally wrapped over conductive layer 28 and is connected to the metallic shield of each cable. The joint is then enclosed in a protective outer jacket 30, with break-out 31 is used to provide an environmental seal between cables 1 and 2.

Figure 3 is a longitudinal section of a trifurcated (H-splice) protected in accordance with another embodiment of this invention. In Figure 3, cables 1, 2, 3 and 4 are spliced together using connector 9 as in Figure 1. Stress control material is applied over the edges of the semiconductive shields 14, 15 and 16 of each of the cables by two plugs 43 and 44 of stress control material. As illustrated in cross section in Figure 4, each plug 43 and 44 is provided with two holes 46,47 through which the cables are positioned. The plugs used in this embodiment are heat shrinkable. After the conductors of the cable have been connected by a connector 7, the stress control plug 43, 44 can be placed in the desired position. Application of heat causes the plug to shrink to intimate contact with the cables extending through the plug. The plug extends between and completely fills the space between the parallel cables at the edges of the conductive layers and surrounds the edges of the semiconductive layers. When installed void free interfaces between the plugs and the cables extending therethrough are formed. The space around the connector block and at the ends of the stress control blocks are filled with an insulating void filling material 45 as in the previous embodiments. Insulating and conductive layers, a metal braid and outer insulating jacket are installed as described in the previous embodiments.

The invention has been described in terms of preferred embodiments. It will be readily apparent to one skilled in the art that other embodiments within the scope of the invention are possible. For example, each pair of parallel cables in an H-splice can be protected in accordance with different embodiments of the invention. The invention has been described utilizing heat recoverable components. Other components could be used, for example the so-called push-on components or components which are dimensionally recoverable without the requirement of heat being applied. In the case of bifurcated joints (Y-splice) the diameter of the single cable may be expanded to more closely approximate the dimensions the connector and the combined parallel cables, by applying additional insulating material around the single cable. This can be applied as a heat-shrinkable tube, if desired.

The invention is also applicable to multi-phase systems, for example, a three-phase system utilizing three-core cables. In this case the three or four conductors of the same phase from the main and branch cables are formed in accordance with this invention. The joints of each of the three phases are independently shielded and a protective outer jacket can be applied over the entire joint.

As mentioned above the method of this invention can also be used with terminations of two adjacent cables. In this case a stress control system can be used in the same manner as it is used for the parallel cables of a bifurcated or trifurcated joint. Also, a common shield can be applied to the adjacent parallel cables. An outer protective jacket and break-outs can be used to environmentally seal the terminations.

## Claims

1. A method of forming a branch-off joint between a shielded, medium voltage electric cable and at least two other shielded, medium voltage electric cables, each of said cables having at least one conductor surrounded by a dielectric layer which in turn is surrounded by an electrically conductive shield, said joint being formed by removing a portion of the dielectric layer to expose a length of the conductor and a portion of the shield to expose a length of the dielectric layer, wherein the method comprises: connecting the conductors of the cables; positioning two of the cables in relatively close substantially parallel relationship to each other; applying between and surrounding the parallel conductors stress control material having an impedance of betweem about $5 \times 10^7$ and $8 \times 10^9$ ohm. cm.; applying insulating material over the joint so as to extend across the joint and overlap a portion of the shield of each of the cables; applying a semi-conductive shielding layer over the insulating material; and electrically connecting said shielding layer to the shield of each of the cables.

2. A method in accordance with Claim 1, wherein said stress control material completely fills the space between the cables.

3. A method in accordance with Claim 1 or 2, wherein said stress control material is applied in the form of a maleable filling composition.

4.  A method in accordance with any preceding Claim, wherein said stress control material is applied in the form of a tape.

5.  A method in accordance with Claim 1, wherein said stress control material is applied to each cable in the form of a dimensionally recoverable tubular article positioned to overlap the shield of the cable and to extend over a length of the adjacent dielectric layer, and wherein a void filling compound is arranged to fill any remaining space between the parallel cables.

6.  A method in accordance with Claim 5, wherein said dimensionally recoverable tubular articles are caused to recover by applying heat thereto.

7.  A method in accordance with Claim 5 or 6, wherein said void filling material is applied in the form of an extruded profile.

8.  A method of enclosing terminations of adjacent shielded, medium voltage electric cables, each of said cables having at least one conductor surrounded by a dielectric layer which in turn is surrounded by an electrically conductive shield, each termination being formed by removing a portion of the dielectric layer to expose a length of the conductor and a portion of the shield to expose a length of the dielectric layer, and by securing each conductor to a termination lug, wherein the method comprises: positioning the cables in relatively close substantially parallel relationship to each other; applying between and surrounding the parallel conductors a stress control material having an impedance of between about $5 \times 10^7$ and $8 \times 10^9$ ohm. cm.;

applying insulating material over the termination such that it overlaps a portion of the shield of each of the cables; applying a semi-conductive shielding layer over the insulating material; and electrically connecting said shielding layer to the shield of each of the cables.

9. A branch-off joint between at least three shielded, medium voltage electric cables, each of said cables comprising at least one conductor surrounded by a dielectric layer a section of which has been removed to expose a length of the conductor, and an outer electrically conductive shield, a section of which has been removed to expose a length of the dielectric layer, wherein the conductors of the cables are jointed together, with two of said cables being positioned in relatively close substantially parallel relationship with each other, wherein stress control material is positioned between said cables and surrounding the edge of each of the conductive shields of said cables and extending along a length of the exposed dielectric layer, wherein insulating material extends across the joint so as to overlap a portion of the shield of each of the cables, and wherein a semi-conductive shielding layer is positioned over the insulating material and is electrically connected to each of the cable shields.

*Fig.1.*

18  14  29  10  22  5  7  24  12  16  30  20

1  3

26  9

2  4

31  19  15  27  11  23  6  8  25  13  28  17  21  32

*Fig.2.*

30  18  14  41  10  5  16  20  29

1  3

42  40

7

2  12  41  27  28

31  19  15  11  6

1/2

0136154

Fig. 3.

Fig. 4.

Fig. 5.